# EUROPEAN PATENT SPECIFICATION

(11) **EP 1 066 940 B1**
(45) Date of publication and mention of the grant of the patent: **20.04.2005**
(21) Application number: 00305415.2
(22) Date of filing: 28.06.2000
(51) Int. Cl.: B29C 33/10, B29D 30/06

(54) **Tyre mould**
Vulkanisierformwerkzeug für Luftreifen
Moule de vulcanisation de pneumatiques

(30) Priority: 29.06.1999 JP 18382999
(43) Date of publication of application: 10.01.2001
(73) Proprietor: Sumitomo Rubber Industries Ltd., Kobe-shi, Hyogo-ken (JP)
(72) Inventor: Hanya, Masahiro, Kobe-shi, Hyogo-ken (JP); Sakamoto, Masayuki, Sarakawa-shi, Fukushimia-ken (JP); Yamamoto, Emiko, Nishinomiya-shi, Hyogo-ken (JP); Ono, Ryo, Shirakawa-shi, Fukushima-ken (JP)
(74) Representative: Manitz, Finsterwald & Partner

(56) References cited:
- US-A- 3 701 615
- US-A- 3 901 632
- US-A- 4 076 473
- US-A- 4 293 293

## Description

The present invention relates to a mould for a pneumatic tyre, more particularly to a mould used with an inflatable bladder which is capable of minimising air staying between the bladder and tyre.

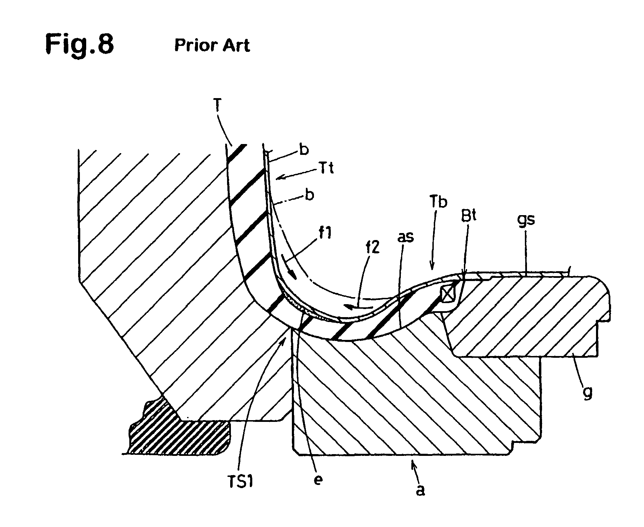

In general, during vulcanising a pneumatic tyre, as shown in Fig.8, the inside of the green tyre T in a mould (a) is pressured by a bladder (b) inflated by a heating and pressurising medium. The bladder (b), during inflating, first contacts the tread portion Tt and the bead portion Tb, and as indicated by arrows f1 and f2, the contact regions expand towards the sidewall portion. Therefore, air (e) is liable to remain between the bladder (b) and green tyre T in the sidewall portion especially near the shoulder portion Ts1. This remaining air (e) partially decreases the pressure which presses the green tyre T against the mould (a). As a result the carcass cord tension is decreased partially, and accordingly, cord elongations, cord spacings and cord directions are liable to become non-uniform around the tyre, which results in deterioration of tyre performances such as steering stability, road noise and force variation and causes bulge or dents on the outside of the tyre, rubber bareness and the like.

US-A-3 701 615 discloses a tyre mould according to a pre-characterizing portion of claim 1. In this known mould air between the bladder and the green tyre is not fully expelled.

US-A-4 293 293 discloses a mould in which air between the bladder and the green tyre is expelled through air vent grooves formed by ribs on the outside of the bladder and venting slots disposed along these ribs. However, the pressure imposed on the inside of the green tyre by the bladder is not uniform due to ribs provided on the bladder.

It is therefore an object of the present invention to provide a tyre mould for use with a bladder which can minimize air between the bladder and green tyre without sacrificing a uniform pressure distribution onto the green tyre by the bladder, and an apparatus comprising such a mould.

This object is achieved by a mould according to claim 1 and an apparatus according to claim 7.

Preferred embodiments of the invention are defined in the dependent claims.

Embodiments of the present invention will now be described in detail in conjunction with the accompanying drawings.
Fig.1 is a schematic cross sectional view of an apparatus for moulding a pneumatic tyre;
Fig.2 is an enlarged partial cross sectional view of a tyre mould according to the present invention;

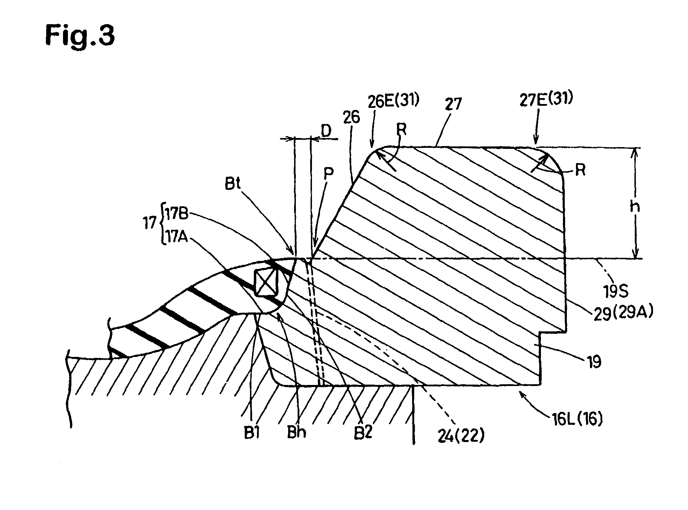

Fig.3 is an enlarged cross sectional view of a bead ring thereof;
Fig.4 is a perspective partial view of the bead ring showing vent means;
Fig.5 is a cross sectional view for explaining the effect of the bead ring;
Fig.6 is a cross sectional view showing another examples of bead rings;
Fig.7 is a cross sectional view of another example of the bladder holder; and
Fig.8 is a cross sectional view showing a prior-art bead ring.

In the drawings, apparatus 1 for moulding a pneumatic tyre T comprises a tyre mould 6 and a bladder 3.

The pneumatic tyre T comprises a tread portion Tt, a pair of axially spaced bead portions Tb and a pair of sidewall portions Ts extending therebetween to have a toroidal shape.

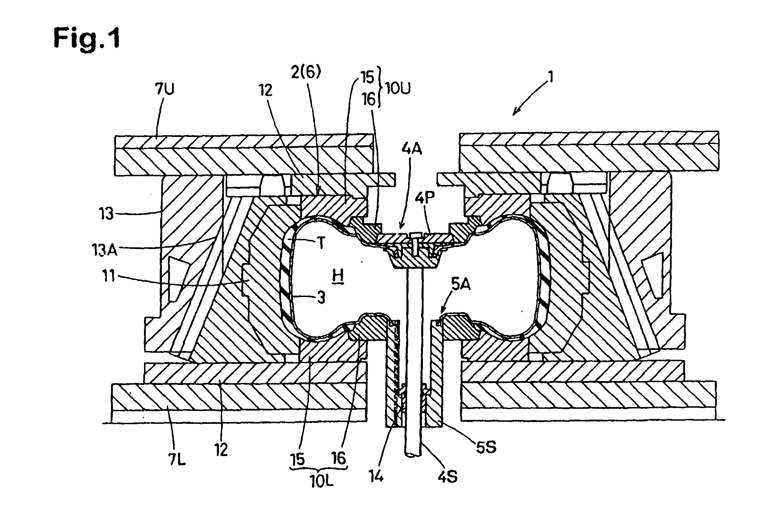

In Fig.1, the tyre mould 6 is supported between an upper platen plate 7U and a lower platen plate 7L each provided with a heater therein. The lower platen plate 7L is mounted on a fixed table (not shown), but the upper platen plate 7U is mounted on a pressing machine (not shown) so that it is movable upward or downward by operating the pressing machine.

The tyre mould 6 in this embodiment is a segmental mould comprising: a tread ring 11 for moulding the outside of the tyre tread Tt, which is made up of circumferentially divided sectors; and a pair of side rings 10U and 10L each of which comprises a sidewall ring 15 for moulding the outside of the tyre sidewall portion Ts and a bead ring 16 for moulding the outside of the tyre bead portion Tb. Thereby, a cavity or hollow H is formed into which a green tyre T can be put.

The upper and lower side rings 10U and 10L are fixed to the above-mentioned upper and lower platen plates 7U and 7L, respectively, by using retainers 12 as shown in Fig.1.

On the radially outside of the upper side ring 10U, an actuator 13 is further fixed to the upper platen plate 7U.

The actuator 13 has a radial inside, which is tapered towards the upper platen plate 7U, and on which each of the sectors 11 is mounted by means of a straight bearing 13A so that each sector 11 is slidable along the taper in a direction parallel to a plane including the mould axis corresponding to the tyre axis.

When the pressing machine operates to move the upper platen plate 7U upwards, the upper sidewall mould 10U is moved upward, and at the same time, all the sectors 11 are first moved radially outward (away from the tread portion of the tyre T) and then moved upward. Thus, the tyre mould 6 opens.

When the pressing machine moves the upper platen plate 7U downward, the upper sidewall mould 10U is moved downward, and at the same time, all the sectors 11 are moved downward and then radially inward. Thus, the tyre mould 6 closes.

In the closed state of the mould, the tread ring 11 has a circumferentially continuously extending inner face (hereinafter, tread moulding face) which is collectively formed by the inner faces of the sectors. The tread moulding face continues to the inner face of each sidewall ring 15 (hereinafter sidewall moulding face). The sidewall moulding face continues to the inner face of each bead ring 16 (hereinafter, bead moulding face 17). These moulding faces are profiled according to the required tyre profile.

The bead moulding face 17 of each of the bead rings 16U and 16L consists of a bottom moulding face 17B for moulding the bottom surface B2 of the tyre bead portion Tb which extends from the bead toe Bt to the bead heel Bh, and an outside moulding face 17A for moulding the axially outer surface B1 of the tyre bead portion Tb which extends radially outward from the bead heel Bh to the radially inner end of the sidewall moulding face.

The bead moulding face 17 is formed at the radially outer end of an annular main portion 19 of the bead ring 16. Further, each bead ring 16 is provided on the radially inner side of the bead moulding face 17 with at least one protrusion 20 (in this embodiment a single circumferentially continuous protrusion).

The protrusion 20 protrudes axially inwardly from the bead toe Bt. In this embodiment, however, in order to control the moulded shape of the toe portion, the protrusion 20 starts to protrude from a position P spaced apart radially inwardly from the bead toe Bt by a small distance D which is more than 1.0 mm. Usually, the distance D is not more than about 15 mm. (In this example, D is about 5 mm)

The axial extent (h) of the protrusion 20 from the bead toe Bt is set in a range of from 0.05 to 0.4 times, preferably 0.15 to 0.30 times the toe width W or the axial distance between the bead toes Bt. (In this example, h is 30 mm)

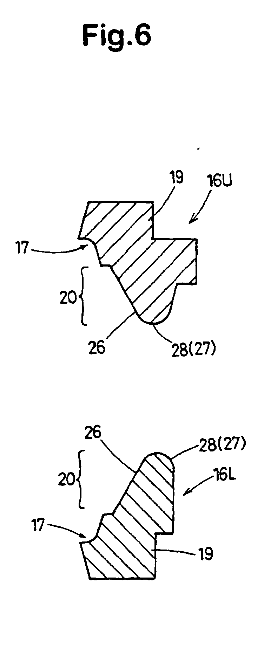

The protrusion 20 has an inclined face 26 which extends axially inward from the starting position P while inclining radially inward. The inclination angle thereof is in a range of from 50 to 90 degrees with respect to the radial direction. (In this example, 60 degrees) In a cross section including the mould axis, the inclined face 26 in this example is straight. However, the inclined face 26 may be a gentle curve, for example a convex curve. Further, each bead ring 16 is provided with a horizontal face 27 extending radially inwardly from the axially inner end 26E of the inclined face 26 substantially parallel with the radial direction. However, as shown in Fig.6, it is also possible to provide a convexly curved face 28 having a relatively small radius of curvature instead of the horizontal face 27.

Between the starting position P and the bead toe Bt in this embodiment, each bead ring 16 is provided with a stabilising face 21 which extends radially inward from the bead toe Bt so as to become substantially flush with the axially inside of the tyre bead portion near the bead toe. The stabilising face 21 in this example is substantially parallel with the radial direction.

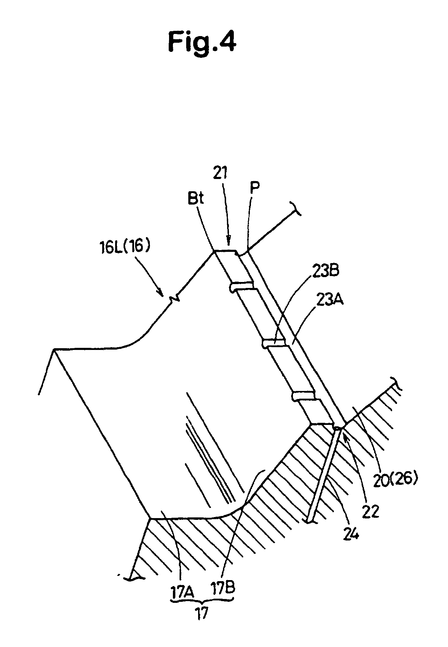

Further, between the starting position P and the bead toe Bt, each bead ring 16 is provided with vent means 22 as shown in Fig.4 to release air to the outside of the mould.

The vent means 22 comprises a circumferential vent groove 23A disposed immediately radially outside the starting position P, radial vent grooves 23B extending from the bead toe Bt to the circumferential vent groove 23A, and at least one vent hole 24 opening in the vent groove 23A and extending to the outside of the mould.

In the case where the above-mentioned stabilising face 21 is not provided, it is preferable to provide vent means 22 on the inclined face 26.

The lower bead ring 16L has a centre hole 29 which is defined by a circumferentially extending radially inner surface 29A, the radially inner surface 29A extending axially outwardly from the radially inner end 27E of the horizontal face 27.

The upper bead ring 16U also has a centre hole which is, in this example, a stepped hole consisting of an axially outer small-diameter hole and an axially inner larger-diameter hole 30. The axially inner larger-diameter hole 30 is defined by a circumferentially extending radially inner surface which is tapered axially outward from the horizontal face 27.

In order to press the green tyre T against the inside or moulding face of the tyre mould 6 for shaping and vulcanising the green tyre t, the above-mentioned bladder 3 is inflated with a high-pressure hot medium (usually steam alone or a mixture of steam and inert gas). The bladder 3 is made of a heat-resisting elastic material, e.g. butyl rubber and the like.

The bladder 3 extends between an upper clamp 4A and a lower clamp 5A of a bladder holder. The bladder holder further comprises a tubular shaft 5S and a centre shaft 4S. The upper end portion of the tubular shaft 5S is inserted into the above-mentioned centre hole 29 of the lower bead ring 16L. The above-mentioned lower clamp 5A is provided at the upper end of the tubular shaft 5S.

The centre shaft 4S is inserted in the tubular shaft 5S and slidably supported thereby by a bearing means 14. The upper end of the centre shaft 4S protrudes from the upper end of the tubular shaft 5S. The upper clamp 4A is provided at the upper end of the centre shaft 4S. Further, a positioner 4P is provided upward or axially outward of the upper bladder holder 4A in order to stop and position the upper bladder holder 4A. The positioner 4P is to be inserted in the axially inner tapered hole 30 of the stepped centre hole of the upper bead ring 16U and has a tapered circumferential face to fit the tapered hole 30.

By deflating the bladder 3 and moving the centre shaft 4S downward, the bladder 3 can be collapsed.

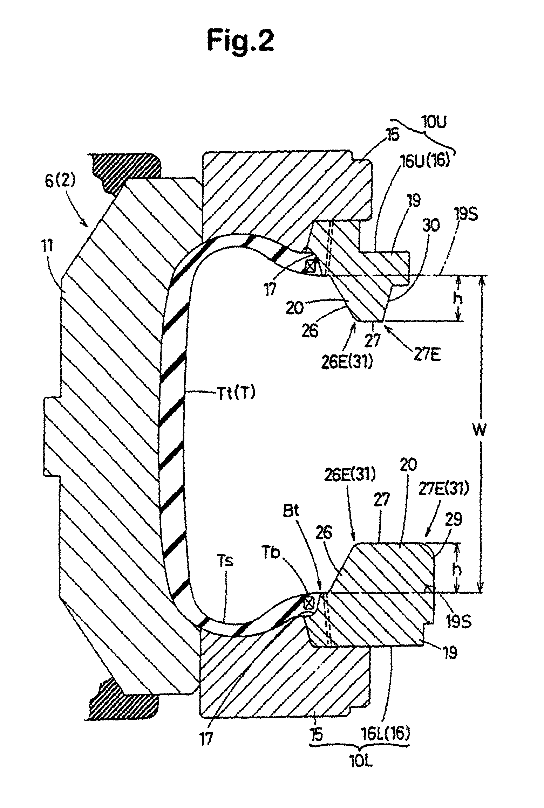

In order to prevent the bladder 3 from tearing, corners 31 of the protrusion 20 around which there is a possibility of the bladder extending are rounded by an arc having a radius R of curvature of from 1.0 to 20 mm. In the case of Fig.2, the corner 31 around the radially outer end 26E of the upper bead ring 16U and the corners 31 around the radially outer and inner ends 26E and 27E of the lower bead ring 16L are rounded.

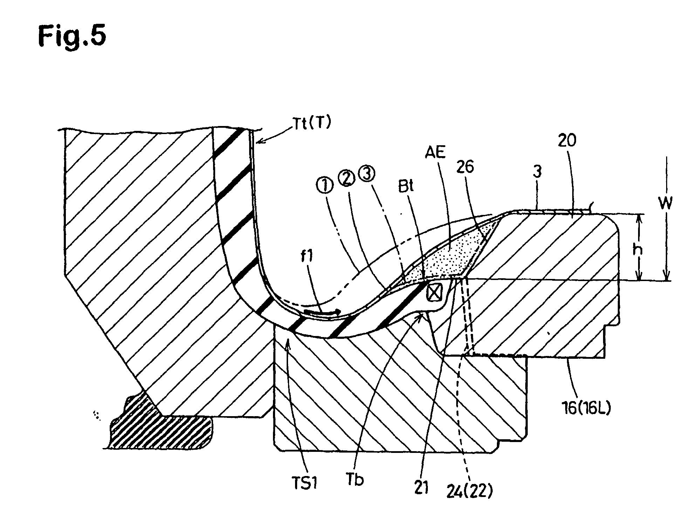

In the present invention, therefore, the protrusions 20 are provided on the radially inside of the bead portions. Therefore, the bladder 3, when inflating, contacts with the inside parts of the tyre in due order, namely, as shown in Fig.5, from the tread portion Tt (state ①)to the shoulder portion Ts1 (state ②) and then the bead toe Bt (state ③). Accordingly, it is possible to prevent air from being trapped and staying between the tyre T and the bladder 3. Incidentally, the air AE between the bladder 3 and green tyre T and bead ring 16 is vented by the vent means 22.

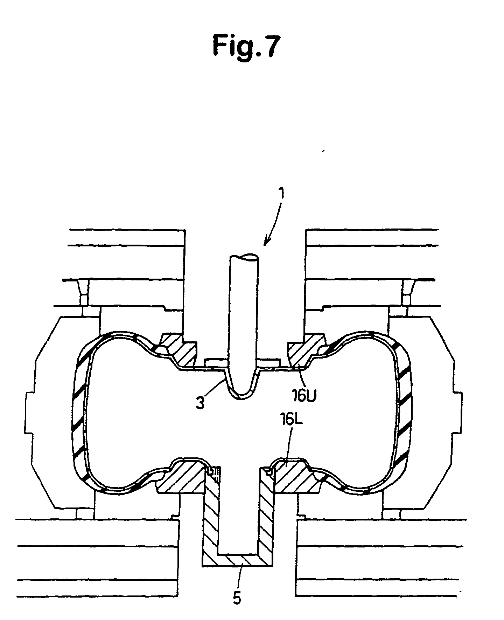

In the present invention, the tread ring 11 and sidewall rings 15 are not limited to a specific structure. For example, a so called two-piece structure can be employed instead of the structure made up of the tread ring 11 and sidewall rings. Also, the bladder holder is not limited to a specific structure. For example, as shown in Fig.7, a so called autoform press type, wherein the bladder 3 can be put away in a bag well 5 can be employed.

## Claims

1. A mould (6) for a pneumatic tyre (T) used with a bladder (3), said pneumatic tyre comprising a pair of axially spaced bead portions (Tb) each with a bead bottom surface (B2) extending from a bead toe (Bt) toward the axially outside of the tyre, said bladder (3) being disposed inside the green tyre (T) put into the mould and inflated to press the green tyre against the inside of the mould, said mould comprising a pair of bead rings (16), each said bead ring (16) provided with a bead bottom moulding face (17B) for moulding said bead bottom surface (B2), as well as air vent means (22) to release air to the outside of the mould and being provided radially inside said bead bottom moulding face (17B) with a protrusion (20) protruding axially inward, said vent means (22) comprising a circumferential vent groove (23A) disposed radially outside the protrusion (20), radial vent grooves (23B) extending from the bead toe (Bt) to the circumferential vent groove (23A), and at least one vent hole (24) opening in the vent groove (23A) and extending towards the outside of the mould, **characterised in that** the protrusion extends axially from the axially inner end of the bead bottom moulding face (17B) so that the axial extent (h) of the protrusion (20) from the axially inner end of the bead bottom moulding face (17B) is in the range of from 0.05 to 0.4 times the axial distance between the axially inner ends of the bead moulding faces (17B),
each said bead ring (16) is provided with a stabilising face (21) which extends radially inward from the bead toe (Bt) so as to become substantially flush with the axially inside of the tyre bead portion near the bead toe (Bt), and the circumferential vent groove (23A) is disposed immediately radially outside the starting position (P) of the protrusion (20).

2. A mould according to claim 1, **characterised in that** said protrusion (20) starts to protrude at a position (P) which is radially inwardly spaced apart from the axially inner end of the bead bottom moulding face by a small distance (D).

3. A mould according to claim 2, **characterised in that** the protrusion (20) has an inclined face (26) which extends axially inward from the protrusion starting position (P), while inclining radially inward, and the inclination angle thereof is in a range of from 50 to 90 degrees with respect to the radial direction.

4. A mould according to claim 3, **characterised in that** air vent means (22) are provided on said inclined face (26).

5. A mould according to any of claims 1 to 4, **characterised in that** a corner (31) of the protrusion (20) around which the bladder extends at least when the bladder (3) is inflated is rounded.

6. A mould according to claim 5, **characterised in that** said corner (31) is rounded by an arc having a radius of from 1.0 to 20 mm.

7. An apparatus for moulding a pneumatic tyre (T), said pneumatic tyre comprising a pair of axially spaced bead portions (Tb) each with a bead bottom surface (B2) extending from a bead toe (Bt) toward the axially outside of the tyre, said apparatus comprising a tyre mould (6) according to one of the preceding claims.

## Patentansprüche

1. Form (6) für einen Luftreifen (T), die mit einem Heizbalg (3) verwendet wird, wobei der Luftreifen ein Paar axial beabstandete Wulstabschnitte (Tb) jeweils mit einer Wulstunterseiten-Oberfläche (B2) umfasst, die sich von einer Wulstzehe (Bt) auf die axiale Außenseite des Reifens zu erstreckt, wobei der Heizbalg (3) im Inneren des in die Form eingesetzten Rohreifens (T) angeordnet und aufgepumpt wird, um den Rohreifen gegen die Innenseite der Form zu pressen, wobei die Form ein Paar Wulstringe (16) umfasst, wobei jeder Wulstring (16) mit einer Wulstunterseiten-Formungsfläche (17B) zur Formung der Wulstunterseiten-Oberfläche (B2) sowie mit Entlüftungsmitteln (22) versehen ist, um Luft aus der Form nach außen freizugeben, und radial innerhalb der Wulstunterseiten-Formungsfläche (17B) mit einem Vorsprung (20) versehen ist, der axial nach innen vorsteht, wobei die Entlüftungsmittel (22) eine Umfangsentlüftungsnut (23A), die radial außerhalb des Vorsprunges (20) angeordnet ist, radiale Entlüftungsnuten (23B), die sich von der Wulstzehe (Bt) zu der Umfangsentlüftungsnut (23A) erstrecken, und zumindest ein Entlüftungsloch (24) umfassen, das sich in die Entlüftungsnut (23A) öffnet und zu der Außenseite der Form erstreckt, **dadurch gekennzeichnet, dass** sich der Vorsprung von dem axial inneren Ende der Wulstunterseiten-Formungsfläche (17B) derart axial erstreckt, dass die axiale Ausdehnung (h) des Vorsprunges (20) von dem axial inneren Ende der Wulstunterseiten-Formungsfläche (17B) im Bereich des 0,05- bis 0,4-fachen des axialen Abstandes zwischen den axial inneren Enden der Wulstformungsflächen (17B) liegt,
wobei jeder Wulstring (16) mit einer Stabilisierungsfläche (21) versehen ist, die sich von der Wulstzehe (Bt) radial nach innen erstreckt, so dass sie mit der axialen Innenseite des Reifenwulstabschnittes nahe der Wulstzehe (Bt) im Wesentlichen bündig wird, und die Umfangsentlüftungsnut (23A) unmittelbar radial außerhalb der Anfangsposition (P) des Vorsprunges (20) angeordnet ist.

2. Form nach Anspruch 1, **dadurch gekennzeichnet, dass** der Vorsprung (20) anfängt, an einer Position (P) hervorzutreten, die von dem axial inneren Ende der Wulstunterseiten-Formungsfläche einen kleinen Abstand (D) radial nach innen hin beabstandet angeordnet ist.

3. Form nach Anspruch 2, **dadurch gekennzeichnet, dass** der Vorsprung (20) eine geneigte Fläche (26) aufweist, die sich von der Anfangsposition (P) des Vorsprunges axial nach innen erstreckt, während sie sich radial nach innen neigt, und ihr Neigungswinkel in einem Bereich von 50 bis 90 Grad in Bezug auf die radiale Richtung liegt.

4. Form nach Anspruch 3, **dadurch gekennzeichnet, dass** die Entlüftungsmittel (22) an der geneigten Fläche (26) vorgesehen sind.

5. Form nach einem der Ansprüche 1 bis 4, **dadurch gekennzeichnet, dass** eine Ecke (31) des Vorsprunges (20), um die sich der Heizbalg zumindest zum Teil erstreckt, wenn der Heizbalg (3) aufgebläht ist, gerundet ist.

6. Form nach Anspruch 5, **dadurch gekennzeichnet, dass** die Ecke (31) mit einem Bogen gerundet ist, der einen Radius von 1,0 bis 20 mm aufweist.

7. Vorrichtung zum Formen eines Luftreifens (T), wobei der Luftreifen ein Paar axial beabstandete Wulstabschnitte (Tb) jeweils mit einer Wulstunterseiten-Oberfläche (B2) umfasst, die sich von einer Wulstzehe (Bt) in Richtung der axialen Außenseite des Reifens erstreckt, wobei die Vorrichtung eine Reifenform (6) nach einem der vorhergehenden Ansprüche umfasst.

## Revendications

1. Moule (6) pour un pneumatique (T) utilisé avec une vessie (3), ledit pneumatique comprenant une paire de portions de talon espacées dans le sens axial (Tb) chacune ayant une surface inférieure de talon (B2) s'étendant depuis une pointe de talon (Bt) vers l'extérieur dans le sens axial du pneumatique, ladite vessie (3) étant disposée à l'intérieur du pneumatique cru (T) mis dans le moule et gonflée pour appuyer le pneumatique cru contre l'intérieur du moule, ledit moule comprenant une paire d'anneaux de talon (16), chacun desdits anneaux de talon (16) étant doté d'une face de moulage inférieure de talon (17B) pour mouler ladite surface inférieure de talon (B2) ainsi que des moyens d'évacuation d'air (22) pour évacuer l'air vers l'extérieur du moule et étant doté dans le sens radial à l'intérieur de ladite face de moulage inférieure de talon (17B) d'une saillie (20) faisant saillie vers l'intérieur dans le sens axial, lesdits moyens d'évacuation (22) comprenant une rainure d'évacuation périphérique (23A) disposée dans le sens radial à l'extérieur de la saillie (20), lesdites rainures d'évacuation radiales (23B) s'étendant de la pointe de talon (Bt) à la rainure d'évacuation périphérique (23A) et au moins un orifice d'évacuation (24) s'ouvrant dans la rainure d'évacuation (23A) et s'étendant vers l'extérieur du moule, **caractérisé en ce que** la saillie s'étend dans le sens axial de l'extrémité intérieure dans le sens axial de la face de moulage inférieure de talon (17B) de telle sorte que l'amplitude axiale (h) de la saillie (20) depuis l'extrémité intérieure dans le sens axial de la face de moulage inférieure de talon (17B) se trouve dans la plage comprise entre 0,05 et 0,4 fois la distance axiale entre les extrémités intérieures dans le sens axial des faces de moulage de talon (17B), chacun desdits anneaux de talon (16) est doté d'une face de stabilisation (21) qui s'étend dans le sens radial vers l'intérieur depuis la pointe de talon (Bt) de manière à devenir sensiblement au même niveau que l'intérieur dans le sens axial de la portion de talon de pneumatique près de la pointe de talon (Bt), et la rainure d'évacuation périphérique (23A) est disposée immédiatement dans le sens radial à l'extérieur de la position de départ (P) de la saillie (20).

2. Moule selon la revendication 1, **caractérisé en ce que** ladite saillie (20) commence à faire saillie à une position (P) qui est espacée dans le sens radial vers l'intérieur de l'extrémité intérieure dans le sens axial de la face de moulage inférieure de talon d'une petite distance (D).

3. Moule selon la revendication 2, **caractérisé en ce que** la saillie (20) possède une face inclinée (26) qui s'étend dans le sens axial vers l'intérieur depuis la position de départ de saillie (P), tout en s'inclinant dans le sens radial vers l'intérieur, et l'angle d'inclinaison de cette dernière est dans la plage comprise entre 50 et 90 degrés par rapport à la direction radiale.

4. Moule selon la revendication 3, **caractérisé en ce que** les moyens d'évacuation d'air (22) sont placés sur ladite face inclinée (26).

5. Moule selon l'une quelconque des revendications 1 à 4, **caractérisé en ce qu'**un coin (31) de la saillie (20) autour de laquelle la vessie s'étend au moins lorsque la vessie (3) est gonflée est arrondi.

6. Moule selon la revendication 5, **caractérisé en ce que** ledit coin (31) est arrondi avec un arc ayant un rayon compris entre 1,0 et 20 mm.

7. Appareil destiné à mouler un pneumatique (T), ledit pneumatique comprenant une paire de portions de talon espacées dans le sens axial (Tb), chacune ayant une surface inférieure de talon (B2) s'étendant depuis une pointe de talon (Bt) vers l'extérieur dans le sens axial du pneumatique, ledit appareil comprenant un moule de pneumatique (6) selon l'une des revendications précédentes.
